(19) Europäisches Patentamt
European Patent Office
Office européen des brevets

(11) **EP 3 406 779 B1**

(12) **EUROPEAN PATENT SPECIFICATION**

(45) Date of publication and mention
of the grant of the patent:
**01.09.2021  Bulletin 2021/35**

(51) Int Cl.:
***D04B 1/20*** *(2006.01)*      *A41D 31/00* *(2019.01)*
***D02G 3/04*** *(2006.01)*

(21) Application number: **16886462.7**

(22) Date of filing: **28.11.2016**

(86) International application number:
**PCT/JP2016/085102**

(87) International publication number:
**WO 2017/126223 (27.07.2017 Gazette 2017/30)**

(54) **FABRIC AND FIBER PRODUCT**

GEWEBE UND FASERPRODUKT

PRODUIT DE TISSU ET DE FIBRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2016  JP 2016008817**

(43) Date of publication of application:
**28.11.2018  Bulletin 2018/48**

(73) Proprietor: **Teijin Frontier Co., Ltd.
Osaka-shi, Osaka 530-0005 (JP)**

(72) Inventor: **OGATA, Nobuaki
Osaka-shi
Osaka 541-0054 (JP)**

(74) Representative: **Cockerton, Bruce Roger
Carpmaels & Ransford LLP
One Southampton Row
London WC1B 5HA (GB)**

(56) References cited:
**EP-A1- 1 266 990      EP-A1- 2 037 026
EP-A1- 2 835 460      WO-A1-2008/001920
JP-A- 2009 299 201    JP-A- 2010 255 128
JP-A- 2013 083 008    JP-A- 2013 104 158**

## Description

Technical Field

The present invention relates to a knitted fabric and a textile product which have excellent water absorbency, quick-drying properties, and anti-see-through properties.

Background Art

Conventionally, cloths having excellent water absorbency have been proposed, focusing on sportswear and the like (e.g., PTL 1 and PTL 2). Meanwhile, for sportswear and the like, not only water absorbency but also quick-drying properties, that is, the property of drying quickly after sweating, are required. Further, anti-see-through properties are also required.

However, water absorbency and quick-drying properties contradict each other. For example, when natural fibers are used or the weight per unit of a cloth is increased in order to enhance the water absorbency, although the water absorbency increases, the quick-drying properties tend to decrease. Conversely, when a cloth is subjected to water-repellent processing in order to enhance the quick-drying properties, the water absorbency tends to decrease.

In addition, quick-drying properties and anti-see-through properties contradict each other. For example, when the weight per unit of a cloth is reduced in order to enhance the quick-drying properties, the anti-see-through properties tend to decrease.

Citation List

Patent Literature

PTL 1: JP-A-2002-266207
PTL 2: JP-A-2010-265560

Summary of Invention

Technical Problem

The invention has been accomplished against the above background. An object thereof is to provide a knitted fabric and a textile product which have excellent water absorbency, quick-drying properties, and anti-see-through properties. Solution to Problem

The present inventors have conducted extensive research to solve the above problems . As a result, they have found that when a low-torque crimped fiber is used, and the density and the thickness are tailored with ingenuity, a knitted fabric having excellent water absorbency, quick-drying properties, and anti-see-through properties can be obtained. As a result of further extensive research, they have accomplished the invention.

Thus, the invention provides "a knitted fabric including a crimped fiber having a torque of 30 T/m or less, characterized in that the knitted fabric has a density of not less than 60 courses/2.54 cm and not less than 45 wales/2.54 cm, and the knitted fabric has a thickness of 0.45 mm or less." A knitted fabric having this property profile is known from Example 3 disclosed in EP 2 835 456 A.

According to the invention the crimped fiber is a composite yarn including a false-twist crimped yarn having a torque in the S-direction and a false-twist crimped yarn having a torque in the Z-direction. A composite yarn of this kind is used for knitting fabrics in EP 2 037 026 A. In addition, it is preferable that the crimped fiber is an entangled yarn that has been subjected to interlacing processing. In addition, it is preferable that the torque of the crimped fiber is non-torque. In addition, it is preferable that the crimped fiber has a single-fiber fineness within a range of 0.3 to 1.3 dtex. In addition, it is preferable that the crimped fiber has a total fineness within a range of 40 to 80 dtex.

In the invention, it is preferable that the knitted fabric has a weight per unit of 130 g/m$^2$ or less. In addition, it is preferable that the knitted fabric has a thickness within a range of 0.30 to 0.45 mm. In addition, it is preferable that the knitted fabric has applied thereto a hydrophilizing agent. In addition, it is preferable that on at least one of the front and back surfaces of the knitted fabric, the water absorbency measured in accordance with JIS L1907-1998 5.1.2, Byreck Method, is 7 cm or more. In addition, it is preferable that on at least one of the front and back surfaces of the knitted fabric after three washes in accordance with JIS L0217-1998, 103 Method, the water absorbency measured in accordance with JIS L1907-1998 5.1.2, Byreck Method, is 8 cm or more. In addition, it is preferable that the dryness measured in accordance with AATCC TEST METHOD 201-2014 is 10 minutes or less. In addition, it is preferable that after five washes in accordance with JIS L0217-1998, 103 Method, the dryness measured in accordance with AATCC TEST METHOD 201-2014 is 12 minutes or less.

In addition, the invention provides a textile product using the above knitted fabric and selected from the group consisting of garments, lining fabrics, interlining fabrics, socks, belly bands, hats, gloves, nightwear, futon's outer fabrics, futon covers, and car seat upholstery materials. Advantageous Effects of Invention

According to the invention, a knitted fabric and a textile product which have excellent water absorbency, quick-drying properties, and anti-see-through properties are obtained.

Brief Description of Drawings

Fig. 1 shows an example of a knitting structure diagram applicable in the invention (plain).
Fig. 2 show an example of a knitting structure diagram applicable in the invention (knit-miss). Description of Embodiments

Hereinafter, embodiments of the invention will be described in detail. First, the invention encompasses a crimped fiber having a torque of 30 T/m or less (hereinafter sometimes simply referred to as "crimped fiber"). Because of the presence of such a crimped fiber in the knitted fabric, fine voids are created between single fibers, and also the knitted fabric surface becomes flat. As a result, the contact area with water increases, whereby the water absorbency improves. In addition, the anti-see-through properties also improve.

Here, it is preferable that the crimped fiber is a composite yarn containing two or more kinds of false-twist crimped yarns that are different from each other in the production condition or fineness. The composite yarn may also contain other yarns, but it is preferable that the composite yarn is composed only of two or more kinds of false-twist crimped yarns that are different from each other in the production condition or fineness.

False-twist crimped yarns include a so-called one-heater false-twist crimped yarn obtained by setting false twists in a first heater zone and a so-called second-heater false-twist crimped yarn obtained by further introducing the yarn into a second heater zone and subjecting the same to a relaxation heat treatment to reduce the torque. In addition, depending on the direction of twisting, there are a false-twist crimped yarn having a torque in the S-direction and a false-twist crimped yarn having a torque in the Z-direction. These false-twist crimped yarns may be used in the invention. In particular, in the case where the composite yarn is formed from a false-twist crimped yarn having a torque in the S-direction and a false-twist crimped yarn having a torque in the Z-direction, a low-torque composite yarn can be obtained; therefore, this is preferable.

The composite yarn can be produced by the following method, for example. That is, it is possible that a yarn is twisted using a twisting apparatus through a first roller and a heat treatment heater at a set temperature of 90 to 220°C (more preferably 100 to 190°C), thereby forming a one-heater false-twist crimped yarn. Alternatively, as necessary, it is also possible that the yarn is further introduced into a second heater zone and subjected to a relaxation heat treatment, thereby forming a second-heater false-twist crimped yarn. The draw ratio during false-twist crimping is preferably within a range of 0.8 to 1.5. The number of false twists is preferably such that in the equation of the number of false twists $(T/m) = (32,500/(D)^{1/2}) \times \alpha$, $\alpha$ is within a range of 0.5 to 1.5 (more preferably 0.8 to 1.2). D is the total fineness of the yarn (dtex). As the twisting apparatus used, a disk-type or belt-type friction twisting apparatus allows for easy threading and hardly causes yarn breakage, and thus is suitable. However, it is also possible to use a pin-type twisting apparatus. In addition, depending on the direction of twisting, the torque of the false-twist crimped yarn can be selected from the S-direction and the Z-direction. Next, two or more kinds of false-twist crimped yarns are combined together, whereby the composite yarn described above can be obtained.

It is preferable that the crimped fiber has been entangled by interlacing processing. In order not to deteriorate the soft texture and stretchability, it is preferable that the number of nodes (interlacing) is within a range of 30 to 90/m. When the number is more than 90/m, the soft texture and stretchability may be impaired. Conversely, when the number is less than 30/m, the bundling properties of the composite yarn may be insufficient, impairing the knitting/weaving properties. Incidentally, the entangling treatment (interlacing processing) may be a treatment using ordinary interlacing nozzles.

It is important that the composite yarn thus obtained has a torque of 30 T/m or less (preferably 18 T/m or less, more preferably 10 T/m or less, and particularly preferably non-torque (0 T/m)). A lower torque is more preferable, and non-torque (0 T/m) is the most preferable. In order to achieve non-torque, it is suitable that when a false-twist crimped yarn having a torque in the S-direction and a false-twist crimped yarn having a torque in the Z-direction are combined together, two kinds of false-twist crimped yarns whose torques are different in direction but otherwise the same are used.

In addition, it is preferable that the crimped fiber has a crimp degree of 2% or more (more preferably 10 to 30%) . When the crimp degree is less than 2%, the water absorbency and anti-see-through properties may decrease.

The crimped fiber may be one having a single-yarn fiber diameter of 1, 000 nm or less, which is so-called "nanofiber", but it is preferable that the single-fiber fineness is within a range of 0.3 to 1.3 dtex (more preferably 0.4 to 1.0 dtex). When the single-fiber fineness is more than 1.3 dtex, the water absorbency and anti-see-through properties may decrease. Conversely, when the single-fiber fineness is less than 0.3 dtex, the quick-drying properties may decrease.

In addition, it is preferable that the crimped fiber has a total fineness (the product of the single-fiber fineness and the number of filaments) within a range of 40 to 80 dtex (more preferably 45 to 70 dtex). When the total fineness is more than 80 dtex, the quick-drying properties may be impaired. Conversely, when the total fineness is less than 40 dtex, the water absorbency and anti-see-through properties may be impaired.

In addition, as the single-yarn cross-sectional shape of the crimped fiber, it may be an ordinary round cross-section, but the fiber may also have a modified cross-sectional shape other than the round cross-section. As modified cross-sectional shapes, the cross-section may be triangular, square, cross-shaped, flat, flat with constrictions, H-shaped, W-shaped, or the like, for example. At this time, in terms of the softness of the cloth, it is preferable that the cross-sectional flatness of the flat cross-sectional shape, which is represented by the ratio B/C1 of the length B in the direction of the longitudinal centerline relative to the maximum width C1 in the direction orthogonal to the direction of the longitudinal centerline, is within a range of 2 to 6 (more preferably 3.1 to 5.0). In addition, in terms of the water absorbency of the cloth, it is preferable that the ratio C1/C2 of the maximum width C1 relative to the minimum width C2 is within a range of 1.05 to 4.00 (more preferably 1.1 to 1.5).

The fiber forming the crimped fiber is not particularly limited, and it is possible to use polyester fibers, acrylic fibers, nylon fibers, rayon fibers, acetate fibers, natural fibers such as cotton, wool, and silk, and combinations thereof. In particular, polyester fibers are used according to the invention. Polyester fibers include composite fibers containing at least a polyester component. Examples of such composite fibers include side-by-side composite fibers, eccentric sheath-core composite fibers, core-sheath composite fibers, and islands-in-sea type composite fibers. In addition, nylon fibers include Nylon 6 fibers and Nylon 66 fibers.

Preferred examples of polyesters include polyesters whose main acid component is terephthalic acid and whose main glycol component is at least one member selected from the group consisting of $C_{2-6}$ alkylene glycols, that is, ethylene glycol, trimethylene glycol, tetramethylene glycol, pentamethylene glycol, and hexamethylene glycol. Among them, a polyester whose main glycol component is ethylene glycol (polyethylene terephthalate) and a polyester whose main glycol component is trimethylene glycol (polytrimethylene terephthalate) are particularly preferable.

Such a polyester may contain a small amount of a copolymer component (usually 30 mol % or less) as necessary. Examples of bifunctional carboxylic acids other than terephthalic acid used in this case include aromatic, aliphatic, and alicyclic bifunctional carboxylic acids such as isophthalic acid, naphthalenedicarboxylic acid, diphenyldicarboxylic acid, diphenoxyethanedicarboxylic acid, β-hydroxyethoxybenzoic acid, p-oxybenzoic acid, 5-sodium sulfoisophthalic acid, adipic acid, sebacic acid, and 1,4-cyclohexanedicarboxylic acid. In addition, examples of diol compounds other than the above glycols include aliphatic, alicyclic, and aromatic diol compounds such as cyclohexane-1,4-dimethanol, neopentyl glycol, bisphenol A, and bisphenol S, as well as polyoxyalkylene glycols.

The polyester may be synthesized by an arbitrary method. For example, in the case of polyethylene terephthalate, it may be produced by the following reactions: a first-stage reaction in which terephthalic acid and ethylene glycol are directly subjected to an esterification reaction, a lower alkyl ester of terephthalic acid such as dimethyl terephthalate and ethylene glycol are subjected to a transesterification reaction, or terephthalic acid and ethylene oxide are allowed to react, thereby producing a glycol ester of terephthalic acid and/or an oligomer thereof; and a second-stage reaction in which the product of the first-stage reaction is heated under reduced pressure to cause a polycondensation reaction until the desired degree of polymerization is reached. In addition, the polyester may be a polyester obtained by material recycling or chemical recycling, or may also be a polyester obtained using a catalyst containing a specific phosphorus compound or titanium compound as described in JP-A-2004-270097 and JP-A-2004-211268. Further, the polyester may also be a biodegradable polyester, such as polylactic acid or stereocomplex polylactic acid.

When the polyester contains a UV absorber in an amount of 0.1 wt % or more (preferably 0.1 to 5.0 wt %) relative to the polyester weight, UV-shielding properties are imparted to the cloth; therefore, this is preferable. Examples of such UV absorbers include benzoxazine-based organic UV absorbers, benzophenone-based organic UV absorbers, benzotriazole-based organic UV absorbers, and salicylic-acid-based organic UV absorbers. Among them, benzoxazine-based organic UV absorbers are particularly preferable in that they do not decompose during spinning.

Preferred examples of benzoxazine-based organic UV absorbers include those disclosed in JP-A-62-11744, such as

2-methyl-3,1-benzoxazin-4-one,

2-butyl-3,1-benzoxazin-4-one,

2-phenyl-3,1-benzoxazin-4-one,

2,2'-ethylenebis(3,1-benzoxazin-4-one),

2,2'-tetramethylenebis(3,1-benzoxazin-4-one),

2,2'-p-phenylenebis(3,1-benzoxazin-4-one),

1,3,5-tri(3,1-benzoxazin-4-on-2-yl)benzene, and

1,3,5-tri(3,1-benzoxazin-4-on-2-yl)naphthalene.

In addition, when the polyester contains a delusterant (titanium dioxide) in an amount of 0.1 wt % or more, particularly 0.2 to 4.0 wt % relative to the polyester weight, the anti-see-through properties of the cloth improve as established with the invention.

Further, as necessary, the polyester may also contain one or more kinds of micropore-forming agents (organic metal sulfonates), coloring inhibitors, heat stabilizers, flame retardants (diantimony trioxide), fluorescent brighteners, coloring pigments, antistatic agents (metal sulfonates), moisture absorbents (polyoxyalkylene glycols), antibacterial agents, and other inorganic particles.

The knitted fabric of the invention includes the crimped fiber described above. At this time, it is preferable that the crimped fiber is present in an amount of 50 wt% or more relative to the knitted fabric weight.

In the knitted fabric of the invention, it is important that the density of the knitted fabric is not less than 60 courses/2.54 cm (preferably 60 to 130 courses/2.54 cm, more preferably 60 to 110 courses/2.54 cm) and not less than 45 wales/2.54 cm (preferably 45 to 90 wales/2.54 cm, more preferably 45 to 70 wales/2.54 cm). When the density of the knitted fabric is lower than this range, the water absorbency and anti-see-through properties may decrease.

In the knitted fabric of the invention, it is preferable that the weight per unit of the knitted fabric is 130 g/m$^2$ or less (more preferably 80 to 120 g/m$^2$) . When the weight per unit is more than 130 g/m$^2$, the quick-drying properties may decrease. Conversely, when the weight per unit is less than 80 g/m$^2$, the water absorbency and anti-see-through properties may decrease.

In addition, in the knitted fabric of the invention, it is important that the thickness of the knitted fabric is 0.45 mm or less (preferably 0.30 to 0.45 mm). When the thickness of the knitted fabric is more than 0.45 mm, the quick-drying properties may decrease. Conversely, when the thickness of the knitted fabric is less than 0.30 mm, the water absorbency and anti-see-through properties may decrease.

In the knitted fabric of the invention, the knitting structure is not particularly limited and may be warp knitting or circular knitting (weft knitting). Also with respect to the number of layers, the structure may be single-layer or multi-layer including two or more layers. Preferred examples thereof include, but are not limited to, plain stitch, knit-miss stitch, interlock stich, rib stitch, pique stitch, plated stitch, Denbigh stitch, and half stitch.

The knitted fabric of the invention is obtained by knitting in the usual manner using the crimped fiber (together with other fibers as necessary).

Next, the knitted fabric is preferably subjected to dyeing processing. At this time, it is preferable that the temperature of dyeing processing is 100 to 140°C (more preferably 110 to 135°C), and the time is such that the top-temperature keep time is within a range of 5 to 40 minutes. The dyeing-processed knitted fabric is preferably subjected to dry-heat final setting. At this time, it is preferable that the temperature of dry-heat final setting is 120 to 200°C (more preferably 140 to 180°C), and the time is within a range of 1 to 3 minutes.

In addition, it is preferable that the knitted fabric of the invention has been subjected to water-absorbing processing. The knitted fabric that has been subjected to water-absorbing processing has improved water absorbency. As such water-absorbing processing, for example, it is preferable that a hydrophilizing agent (water-absorbing processing agent), such as polyethylene glycol diacrylate, a derivative thereof, or a polyethylene terephthalate-polyethylene glycol copolymer, is attached to the knitted fabric in an amount of 0.25 to 0.50 wt% relative to the knitted fabric weight. Examples of water-absorbing processing methods include an in-bath processing method in which a water-absorbing processing agent is mixed with a dyeing liquid at the time of dyeing processing, a method in which before dry-heat final setting, the cloth is dipped in a water-absorbing processing liquid and squeezed with a mangle, and coating processing methods such as gravure coating and screen printing.

Further, it is also possible to additionally apply conventional napping, UV shielding, or various kinds of function-imparting processing using an antibacterial agent, a deodorant, an insect repellent, a phosphorescent agent, a retroreflective agent, a minus ion generator, a water repellent, and the like.

The knitted fabric thus obtained includes the crimped fiber described above and also has the density and thickness described above, and thus has excellent water absorbency, quick-drying properties, and anti-see-through properties.

Here, it is preferable that on at least one of the front and back surfaces of the knitted fabric, the water absorbency measured in accordance with JIS L1907-1998 5.1.2, Byreck Method, is 7 cm or more (more preferably 7 to 15 cm).

In addition, it is preferable that on at least one of the front and back surfaces of the knitted fabric after three washes in accordance with JIS L0217-1998, 103 Method, the water absorbency measured in accordance with JIS L1907-1998 5.1.2, Byreck Method, is 8 cm or more (more preferably 8 to 16 cm).

In addition, it is preferable that the dryness (drying speed) measured in accordance with AATCC TEST METHOD 201-2014 is 10 minutes or less (more preferably 1 to 5 minutes). In addition, it is preferable that after five washes in accordance with JIS L0217-1998, 103 Method, the dryness measured in accordance with AATCC TEST METHOD 201-2014 is 12 minutes or less (more preferably 1 to 5 minutes).

In addition, as an index of anti-see-through properties, it is preferable that the UV protection factor UPF is 23 or more (more preferably 25 to 50).

In addition, the invention provides a textile product using the above knitted fabric and selected from the group consisting of garments, lining fabrics, interlining fabrics, socks, belly bands, hats, gloves, nightwear, futon's outer fabrics, futon covers, and car seat upholstery materials. The textile product uses the knitted fabric described above and thus has excellent water absorbency, quick-drying properties, and anti-see-through properties.

Examples

Hereinafter, the invention will be described in detail with reference to examples, but the invention is not limited thereto. Incidentally, in the examples, the properties were measured by the following methods.

(1) Torque

A sample (crimped yarn) about 70 cm long is transversely tensioned. An initial load of 0.18 mN × indicated tex (2 mg/de) is hung in the center, and then both ends are put together. The yarn starts rotating due to residual torque. The yarn is kept as it is until the initial load becomes stationary, thereby giving a twisted yarn. The twisted yarn thus obtained is measured for the number of twists per 25 cm using a twist counter under a load of 17.64 mN × indicated tex (0.2 g/de) . The number of twists obtained (T/25 cm) is multiplied by 4 and defined as torque (T/m).

(2) Degree of Interlacing

An entangled yarn 1 m long is taken under a load of 8.82 mN × indicated tex (0.1 g/de) . The load is removed, then the yarn is allowed to crimp at room temperature for 24 hours, and the number of nodes is read and indicated as the number of nodes/m.

(3) Crimp Degree

A test yarn was wound around a sizing reel having a perimeter of 1.125 m to prepare a skein having a dry fineness of 3, 333 dtex. The skein is hung on a hanger nail of a scale plate, then an initial load of 6 g is applied to its lower part, and further a load of 600 g is applied; the resulting skein length is measured as L0. The load is then immediately removed from the skein, and the skein is removed from the hanger nail of the scale plate and immersed in boiling water for 30 minutes, allowing crimps to be developed. The boiling-water-treated skein is taken out from boiling water, and moisture contained in the skein is removed by absorption on a filter paper, followed by air-drying for 24 hours at room temperature. The air-dried skein is hung on a hanger nail of a scale plate, then a load of 600 g is applied to its lower part, and the skein length after 1 minute is measured as L1a. The load is then removed from the skein, and the skein length after 1 minute is measured as L2a. The crimp degree (CP) of the test filament yarn is calculated by the following equation.

$$CP\ (\%) = ((L1a - L2a)/L0) \times 100$$

(4) Washing and Drying

Washing is performed in accordance with JIS L0217-1998, 103 Method, and then drying is performed in accordance with JIS L1096-2010, 8.24.1, A1 Method-2.3 Tumbler. Incidentally, in the case of three washes (five washes), drying is performed after three washes (five washes).

(5) Water Absorbency

Measurement is performed in accordance with JIS L1907-1998 5.1.2, Byreck Method.

(6) Dryness (Drying Speed)

Measurement is performed in accordance with AATCC TEST METHOD 201-2014.

(7) Weight per Unit

Measurement is performed in accordance with JIS L1018-1998 6.4.

(8) Thickness

Measurement is performed in accordance with JIS L1018-1998 6.5.

(9) UV Protection Factor UPF

In accordance with the Australia/New Zealand Standard (AS/NZS; 4399:1996), UV transmission at 280 to 400 nm is measured using a spectrophotometer, and UPF is calculated therefrom considering a predetermined damage factor.

(10) Anti-See-Through Properties

Four-level evaluation was made based on visual judgement by panelists as follows: Level 4: particularly excellent anti-see-through properties, Level 3: Excellent anti-see-through properties, Level 2: Fair, Level 1: Poor anti-see-through properties.

[Example 1]

Polyethylene terephthalate (delusterant content: 0.3 wt %) was melt-spun at 280°C from an ordinary spinning apparatus, then taken up at a rate of 2,800 m/min, and wound up without drawing to give a semi-drawn polyester yarn (single-yarn fiber cross-sectional shape: round cross-section).

Next, the polyester yarn was subjected to simultaneous drawing and false-twist crimping under the following conditions: draw ratio: 1.6, the number of false twists: 2,500 T/m (S-direction), heater temperature: 180°C, yarn speed: 350 m/min.

In addition, the polyester yarn was subjected to simultaneous drawing and false-twist crimping under the following conditions: draw ratio: 1.6, the number of false twists: 2,500 T/m (Z-direction), heater temperature: 180°C, yarn speed: 350 m/min.

Next, the false-twist crimped yarn having a torque in the S-direction and the false-twist crimped yarn having a torque in the Z-direction were combined together and subjected to an air-entangling treatment, thereby giving a composite yarn (total fineness: 66 dtex/72 fil, crimp degree: 28%, torque: 0 T/m) as Yarn Type 1 (crimped fiber). At this time, the air-entangling treatment was interlacing processing using an interlacing nozzle, and 50 nodes/m were given at an overfeed rate of 1.0% and a pneumatic pressure of 0.3 M Pa (3 kgf/cm$^2$).

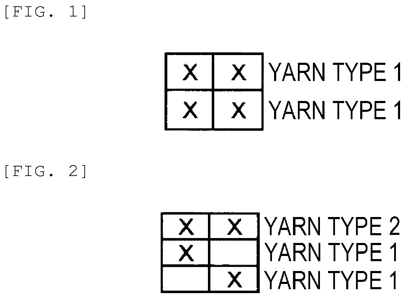

Next, using a 36-gauge circular knitting machine, a circular-knitted fabric having the plain structure shown in Fig. 1 was knitted using Yarn Type 1.

Then, the knitted fabric was subjected to dyeing processing at a temperature of 130°C for a keep time of 15 minutes. At the time of dyeing processing, using a hydrophilizing agent (polyethylene terephthalate-polyethylene glycol copolymer) at a proportion of 2 ml/l relative to the dyeing liquid, the hydrophilizing agent was applied to the knitted fabric in the same bath. Next, the circular-knitted fabric was subjected to dry-heat final setting at a temperature of 160°C for 1 minute.

The obtained knitted fabric had excellent water absorbency and also excellent quick-drying properties. The density, weight per unit, thickness, and evaluation results are shown in Table 1. Incidentally, "C" is the number of courses/2.54 cm, and "W" is the number of wales/2.54 cm.

In addition, using the knitted fabric, a garment was obtained and worn. As a result, it had excellent water absorbency and also excellent quick-drying properties.

[Example 2]

In Example 1, the number of single yarns of Yarn Type 1 was changed, and Yarn Type 1 was obtained in the same manner (total fineness: 66 dtex/144 fil, crimp degree: 9.5%, torque: 0 T/m). In addition, the number of gauges of the circular knitting machine used, Yarn Type 1, density, weight per unit, and thickness were changed as in Table 1. The evaluation results are shown in Table 1.

[Example 3]

In Example 2, in addition to Yarn Type 1, a false-twist crimped yarn made of polyethylene terephthalate was

**EP 3 406 779 B1**

also used as Yarn Type 2 (total fineness: 56 dtex/72 fil, crimp degree: 26%, torque 20: T/m), and the density, weight per unit, and thickness were changed as in Table 1. At this time, the knitting structure was the knit-miss structure shown in Fig. 2. The evaluation results are shown in Table 1. Incidentally, the weight proportion of Yarn Type 1 was 55 wt%.

[Example 4]

In Example 3, the same Yarn Type 1 as in Example 1 was used, and the density, weight per unit, and thickness were changed as in Table 1. The evaluation results are shown in Table 1. Incidentally, the weight proportion of Yarn Type 1 was 53 wt%.

[Comparative Example 1]

As shown in Table 1, a knitted fabric was obtained using a false-twist crimped yarn made of polyethylene terephthalate (total fineness: 84 dtex/72 fil, crimp degree: 18%, torque: 25 T/m, delusterant content: 0.3 wt%). The evaluation results are shown in Table 1.

[Comparative Example 2]

As shown in Table 1, a knitted fabric was obtained using a false-twist crimped yarn made of polyethylene terephthalate (total fineness: 56 dtex/72 fil, crimp degree: 26%, torque: 20 T/m, delusterant content: 0.3 wt%). The evaluation results are shown in Table 1.

[Comparative Example 3]

As shown in Table 1, a knitted fabric was obtained using a false-twist crimped yarn made of polyethylene terephthalate (total fineness of 84 dtex/72 fil, crimp degree: 18%, torque: 25 T/m, delusterant content: 0.3 wt%) and a false-twist crimped yarn made of polyethylene terephthalate (total fineness of 56 dtex/72 fil, crimp degree: 26%, torque: 20 T/m, delusterant content: 0.3 wt%). The evaluation results are shown in Table 1.

8

[Table 1]

| | | Example 1 | Example 2 | Example 3 | Example 4 | Comparative Example 1 | Comparative Example 2 | Comparative Example 3 |
|---|---|---|---|---|---|---|---|---|
| Knitting Design | Gauge | 36 G | 46 G | 46 G | 44 G | 36 G | 46 G | 36 G |
| | Structure | Plain | Plain | Knit-miss | Knit-miss | Plain | Plain | Knit-miss |
| Yarn Type | Yarn Type 1 | SD66T72 Composite yarn | SD66T144 Composite yarn | SD66T144 Composite yarn | SD66T72 Composite yarn | SD84T72 (Z) | SD56T72 (Z) | SD84T72 (Z) |
| | Yarn Type 2 | | | SD56T72 (Z) | SD56T72 (Z) | | | SD56T72 (Z) |
| Knitted Fabric | Knitted Fabric Density (C/W) | 65/50 | 105/60 | 95/60 | 85/58 | 60/50 | 100/56 | 85/53 |
| | Weight per Unit (g/m$^2$) | 110 | 98 | 95 | 100 | 132 | 100 | 100 |
| | Thickness (mm) | 0.37 | 0.35 | 0.42 | 0.41 | 0.52 | 0.5 | 0.51 |
| Before Washing | Water Absorbency (cm) | 7.5/8.5 | 10.5/11.0 | 11.0/11.3 | 9/8.8 | 5.8/6.8 | 6.2/6.7 | 6.1/6.8 |
| | Dryness (min) | 4.5 | 3.5 | 3.2 | 4.2 | 6.5 | 7.8 | 6.3 |
| After Washing | Water Absorbency (cm) | 8.5/9.0 | 10.7/11.1 | 11.2/11.5 | 9.5/9.0 | 6.2/7.5 | 6.5/6.8 | 6.4/7.1 |
| | Dryness (min) | 5.4 | 4.2 | 4.1 | 4.8 | 7.3 | 8 | 7.1 |
| Anti-See-Through Properties | | Level 3 | Level 4 | Level 3 | Level 3 | Level 2 | Level 2 | Level 1 |
| UPF | | 35 | 40 | 25 | 25 | 20 | 15 | 10 |

Industrial Applicability

According to the invention, a knitted fabric and a textile product which have excellent water absorbency, quick-drying properties, and anti-see-through properties are provided. Thus, the industrial value of the invention is extremely high.

**Claims**

1. A knitted fabric comprising a crimped fiber having a torque of 30 T/m or less, **characterized in that** the knitted fabric has a density of not less than 60 courses/2.54 cm and not less than 45 wales/2.54 cm, and the knitted fabric has a thickness of 0.45 mm or less; **characterised in that** the crimped fiber is a composite yarn including a false-twist crimped yarn having a torque in the S-direction and a false-twist crimped yarn having a torque in the Z-direction; wherein the fibre forming the crimper fiber is a polyester fibre containing a delusterant in an amount of 0.2 to 4.0 wt % relative to the polyester weight.

2. The knitted fabric according to claim 1, wherein the crimped fiber is an entangled yarn that has been subjected to interlacing processing.

3. The knitted fabric according to claim 1 or claim 2, wherein the torque of the crimped fiber is non-torque.

4. The knitted fabric according to any one of claims 1 to 3, wherein the crimped fiber has a single-fiber fineness within a range of 0.3 to 1.3 dtex.

5. The knitted fabric according to any one of claims 1 to 4, wherein the crimped fiber has a total fineness within a range of 40 to 80 dtex.

6. The knitted fabric according to any one of claims 1 to 5, wherein the knitted fabric has a weight per unit of 130 g/m$^2$ or less.

7. The knitted fabric according to any one of claims 1 to 6, wherein the knitted fabric has a thickness within a range of 0.30 to 0.45 mm.

8. The knitted fabric according to any one of claims 1 to 7, wherein the knitted fabric has applied thereto a hydrophilizing agent.

9. The knitted fabric according to any one of claims 1 to 8, wherein on at least one of the front and back surfaces of the knitted fabric, the water absorbency measured in accordance with JIS L1907-1998 5.1.2, Byreck Method, is 7 cm or more.

10. The knitted fabric according to any one of claims 1 to 9, wherein on at least one of the front and back surfaces of the knitted fabric after three washes in accordance with JIS L0217-1998, 103 Method, the water absorbency measured in accordance with JIS L1907-1998 5.1.2, Byreck Method, is 8 cm or more.

11. The knitted fabric according to any one of claims 1 to 10, wherein the dryness measured in accordance with AATCC TEST METHOD 201-2014 is 10 minutes or less.

12. The knitted fabric according to any one of claims 1 to 10, wherein after five washes in accordance with JIS L0217-1998, 103 Method, the dryness measured in accordance with AATCC TEST METHOD 201-2014 is 12 minutes or less.

13. A textile product comprising the knitted fabric according to any one of claims 1 to 12 and selected from the group consisting of garments, lining fabrics, interlining fabrics, socks, belly bands, hats, gloves, nightwear, futon's outer fabrics, futon covers, and car seat upholstery materials.

**Patentansprüche**

1. Maschenware, umfassend eine gekräuselte Faser mit einem Drall von 30 T/m oder weniger, **dadurch gekenn-**

**zeichnet, dass** die Maschenware eine Dichte von nicht weniger als 60 Bahnen/2,54 cm und nicht weniger als 45 Maschenstäbchen/2,54 cm aufweist und dass die Maschenware eine Dicke von 0,45 mm oder weniger aufweist; **dadurch gekennzeichnet, dass**
die gekräuselte Faser ein Verbundgarn ist, umfassend ein falschverdrilltes gekräuseltes Garn mit einem Drall in der S-Richtung und ein falschverdrilltes gekräuseltes Garn mit einem Drall in der Z-Richtung; wobei die Faser, die die Kräuselfaser bildet, eine Polyesterfaser ist, die ein Mattierungsmittel in einer Menge von 0,2 bis 4,0 Gew.-% bezüglich des Polyestergewichts enthält.

2. Maschenware nach Anspruch 1, wobei die gekräuselte Faser ein verflochtenes Garn ist, das einer Verflechtungsverarbeitung ausgesetzt wurde.

3. Maschenware nach Anspruch 1 oder Anspruch 2, wobei der Drall der gekräuselten Faser ohne Drall ist.

4. Maschenware nach einem der Ansprüche 1 bis 3, wobei die gekräuselte Faser eine Einzelfaserfeinheit in einem Bereich von 0,3 bis 1,3 dtex aufweist.

5. Maschenware nach einem der Ansprüche 1 bis 4, wobei die gekräuselte Faser eine Gesamtfeinheit in einem Bereich von 40 bis 80 dtex aufweist.

6. Maschenware nach einem der Ansprüche 1 bis 5, wobei die Maschenware ein Gewicht pro Einheit von 130 g/m$^2$ oder weniger aufweist.

7. Maschenware nach einem der Ansprüche 1 bis 6, wobei die Maschenware eine Dicke in einem Bereich von 0,30 bis 0,45 mm aufweist.

8. Maschenware nach einem der Ansprüche 1 bis 7, wobei auf die Maschenware ein Hydrophilierungsmittel aufgetragen wurde.

9. Maschenware nach einem der Ansprüche 1 bis 8, wobei auf zumindest einer aus der vorderen und hinteren Oberfläche der Maschenware die Wasserabsorbierbarkeit, gemessen in Übereinstimmung mit JIS L1907-1998 5.1.2, Byreck-Verfahren, 7 cm oder mehr ist.

10. Maschenware nach einem der Ansprüche 1 bis 9, wobei auf zumindest einer aus der vorderen und hinteren Oberfläche der Maschenware, nach drei Waschgängen in Übereinstimmung mit JIS L0217-1998, 103-Verfahren, die Wasserabsorbierbarkeit, gemessen in Übereinstimmung mit JIS L1907-1998 5.1.2, Byreck-Verfahren, 8 cm oder mehr ist.

11. Maschenware nach einem der Ansprüche 1 bis 10, wobei die Trockenheit, gemessen in Übereinstimmung mit dem AATCC-PRÜFVERFAHREN 201-2014, 10 Minuten oder weniger ist.

12. Maschenware nach einem der Ansprüche 1 bis 10, wobei, nach fünf Waschgängen in Übereinstimmung mit JIS L0217-1998, 103-Verfahren, die Trockenheit, gemessen in Übereinstimmung mit dem AATCC-PRÜFVERFAHREN 201-2014, 12 Minuten oder weniger ist.

13. Textiles Produkt, umfassend die Maschenware nach einem der Ansprüche 1 bis 12 und ausgewählt aus der Gruppe, die besteht aus Kleidungsstücken, Auskleidungsgeweben, Einlagegeweben, Socken, Bauchbinden, Hüten, Handschuhen, Nachtkleidung, Außengeweben für Futons, Futonabdeckungen und Polstermaterialien für Fahrzeugsitze.

**Revendications**

1. Tissu tricoté comprenant une fibre frisée ayant un couple de torsion de 30 T/m ou moins, **caractérisé en ce que** le tissu tricoté a une densité qui n'est pas inférieure à 60 rangées/2,54 cm et qui n'est pas inférieure à 45 colonnes de mailles/2,54 cm, et le tissu tricoté a une épaisseur de 0,45 mm ou moins ;
**caractérisé en ce que**
la fibre frisée est un fil composite contenant un fil frisé fausse torsion ayant un couple de torsion dans la direction S et un fil frisé fausse torsion ayant un couple de torsion dans la direction Z ; dans lequel la fibre formant la fibre frisée est une fibre de polyester contenant un agent délustrant dans une quantité de 0,2 à 4,0 % en poids relativement au poids du polyester.

2. Tissu tricoté selon la revendication 1, dans lequel la fibre frisée est un fil enchevêtré qui a été soumis à un traitement d'entrelacement.

3. Tissu tricoté selon la revendication 1 ou la revendication 2, dans lequel le couple de torsion de la fibre frisée est un couple de torsion nul.

4. Tissu tricoté selon l'une quelconque des revendications 1 à 3, dans lequel la fibre frisée a une finesse de fibre individuelle de 0,3 à 1,3 dtex.

5. Tissu tricoté selon l'une quelconque des revendications 1 à 4, dans lequel la fibre frisée a une finesse totale de 40 à 80 dtex.

6. Tissu tricoté selon l'une quelconque des revendications 1 à 5, le tissu tricoté ayant un grammage de 130 g/m$^2$ ou moins.

7. Tissu tricoté selon l'une quelconque des revendications 1 à 6, le tissu tricoté ayant une épaisseur de 0,30 à 0,45 mm.

8. Tissu tricoté selon l'une quelconque des revendications 1 à 7, le tissu tricoté comportant un agent hydrophilisant appliqué dessus.

9. Tissu tricoté selon l'une quelconque des revendications 1 à 8, dans lequel sur au moins l'une des surfaces antérieure et postérieure du tissu tricoté, la capacité d'absorption d'eau mesurée selon JIS L1907-1998 5.1.2, Méthode Byreck, est de 7 cm ou plus.

10. Tissu tricoté selon l'une quelconque des revendications 1 à 9, dans lequel sur au moins l'une des surfaces antérieure et postérieure du tissu tricoté après trois lavages selon JIS L0217-1998, Méthode 103, la capacité d'absorption d'eau mesurée selon JIS L1907-1998 5.1.2, Méthode Byreck, est de 8 cm ou plus.

11. Tissu tricoté selon l'une quelconque des revendications 1 à 10, dans lequel la vitesse de séchage mesurée selon la Méthode d'essai AATCC 201-2014 est de 10 minutes ou moins.

12. Tissu tricoté selon l'une quelconque des revendications 1 à 10, dans lequel après cinq lavages selon JIS L0217-1998, Méthode 103, la vitesse de séchage mesurée selon la Méthode d'essai AATCC 201-2014 est de 12 minutes ou moins.

13. Produit textile comprenant le tissu tricoté selon l'une quelconque des revendications 1 à 12 et sélectionné dans le groupe constitué des vêtements, des tissus de doublure, des tissus de renforcement, des chaussettes, des bandes de maternité, des chapeaux, des gants, des vêtements de nuit, des tissus de revêtement pour futons, des housses de futons et des matériaux pour garnitures de sièges d'automobiles.

[FIG. 1]

| X | X | YARN TYPE 1 |
| X | X | YARN TYPE 1 |

[FIG. 2]

| X | X | YARN TYPE 2 |
| X |   | YARN TYPE 1 |
|   | X | YARN TYPE 1 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002266207 A
- JP 2010265560 A
- EP 2835456 A
- EP 2037026 A
- JP 2004270097 A
- JP 2004211268 A
- JP 62011744 A